# EUROPEAN PATENT APPLICATION

(11) **EP 2 645 218 A1**
(43) Date of publication of application: **02.10.2013**
(21) Application number: 12002274.4
(22) Date of filing: 29.03.2012
(51) Int. Cl.: G06F 3/048, G06F 9/445

(54) **Method for operating an electronic device**

(71) Applicant: Sony Mobile Communications AB, 221 88 Lund (SE)
(72) Inventor: Karlsson, David, 222 41 Lund (SE)
(74) Representative: Banzer, Hans-Jörg

(57) **Abstract**

A method for operating an electronic device (100) using a user interface is provided. The user interface comprises a touch sensitive surface (104) to be touched by an object (200) and a proximity sensor (103). According to the method, a position information of the object (200) is determined using the proximity sensor (103) while the object (200) approaches the touch sensitive surface (104) without touching the touch sensitive surface (104). Based on the position information a touch position where the object (200) will presumably contact the touch sensitive surface (104) is estimated. A function of the electronic device (100) is controlled depending on the estimated touch position.

## Description

### FIELD OF THE INVENTION

The present application relates to a method for operating an electronic device using a user interface, especially to a user interface comprising a touch sensitive surface to be touched by the user and a proximity sensor. The present application relates furthermore to a user interface for an electronic device and to a mobile device, for example a mobile telephone.

### BACKGROUND OF THE INVENTION

Touch panels are widely known in the art for controlling devices, for example mobile devices or mobile telephones, via a user interface. The touch panel may be arranged on the top of a display forming a so called touch screen. A touch screen provides a very intuitive way of operating the device. Information may be displayed on the display and in response to the information displayed the user may touch the display for initiating actions or operations. The touch panel may comprise a so called capacitive touch panel detecting a change of capacity when the user touches the surface of the touch panel. Upon touching the surface, an action corresponding to the touch position and the displayed information at the touch position may be performed. The action may comprise for example emitting a sound signal or an output on the display confirming the touch to the user or an application or process may be started. However, it may take a short moment between touching the surface and performing the action due to complex operations which may be performed by a processor of the mobile device. This delay may appear as an annoying effect to the user.

Therefore, there is a need to reduce the delay between touching a surface of a touch panel and a corresponding reaction of the device. In other words, there is a need to increase the responsiveness of a touch based user interface, especially for consumer products like mobile phones.

### SUMMARY OF THE INVENTION

According to the present invention, this object is achieved by a method for operating an electronic device as defined in claim 1, a user interface for an electronic device as defined in claim 12, and a mobile device as defined in claim 14. The dependent claims define preferred and advantageous embodiments of the invention.

According to an aspect of the present invention, a method for operating an electronic device using a user interface is provided. The user interface comprises a touch sensitive surface which is to be touched by an object, for example a user's finger or a stylus, for inputting information to the user interface. The user interface comprises furthermore a proximity sensor. According to the method, a position information of the object is determined using the proximity sensor while the object is approaching the touch sensitive surface without touching the touch sensitive surface. Based on the position information of the object a touch position where the object will presumably contact the touch sensitive surface is estimated. Depending on the estimated touch position a function of the electronic device is controlled.

With the introduction of the proximity sensor the electronic device is able to measure a location of for example an interacting hand or finger with a high degree of accuracy. Based on this information a processing unit of the electronic device can make predictions about what user interface elements displayed on the user interface will presumably be touched by the user and may preload or prepare appropriate resources which makes the device seem to be more responsive.

According to an embodiment, the position information is determined by determining a sequence of position information of the object (for example finger or stylus) approaching the touch sensitive surface without touching the touch sensitive surface using the proximity sensor. The touch position where the object will presumably touch the touch sensitive surface is estimated based on the sequence of position information. For example, based on the sequence of position information, a moving direction in which the object is moving may be determined. Based on the moving direction the touch position where the object will contact the touch sensitive surface may be estimated. Furthermore, a moving speed with which the object is moving may be determined based on the sequence of position information. Based on the moving direction and moving speed the touch position where the object will presumably touch the touch sensitive surface may be estimated. By measuring the direction and speed with which for example a finger moves towards the touch sensitive surface, the processing unit can predict where and when the finger will hit the touch sensitive surface if the user does not change their mind and aborts the gesture. Given the speed the processing unit can predict how likely it is that the user will abort the gesture, for example, at a high speed and a low distance the user will simply not be able to abort the gesture before the finger hits the touch sensitive surface. Based on the predictions from measurements of the proximity sensor determining the user's hand movement, the device may take proactive actions such as preloading a resource before it is really needed and may increase by this the responsiveness of the device.

The position information of the object approaching the touch sensitive surface without or before touching the touch sensitive surface by use of the proximity sensor may be determined in a vicinity of the touch sensitive surface within an arrange of 5-100 mm with respect to the touch sensitive surface. In this range a pretty good estimation of the current position of the object, for example a finger tip or a tip of a stylus, may be determined and furthermore the touch position where the object will presumably touch the touch sensitive surface may be predicted with a high accuracy.

According to an embodiment, the user interface comprises a display for displaying information at the touch sensitive surface. According to the method, a user interface element is displayed at a user interface element position at the touch sensitive surface. An application which is related to the user interface element is to be started when the user interface element position is touched by the object, for example by the finger or the stylus. Furthermore, if the estimated touch position where the object will presumably touch the touch sensitive surface corresponds to the user interface element position, a starting of the application will be prepared. Thus, by using predictions based on the proximity sensor the starting of the application, which will presumably be started upon touching the user interface element position, can be prepared and thus a responsiveness of the electric device can be increased.

The touch sensitive surface may be configured to determine a touch position where the object touches the touch sensitive surface. When a touch position is determined where the object touches the touch sensitive surface, a corresponding application is started. If the touch position corresponds to the predicted touch position, the application can be started in a short time due to the preparation.

Preparing the starting of the application may comprise for example loading a program code of the application into a working memory of the processing unit, performing an initialization of the application, allocating or loading additional resources required by the application, or loading a sound information or a display information which is to be output as a confirmation when the user interface element position is touched.

According to an embodiment, the proximity sensor comprises for example a camera, a stereo camera, or a capacitive proximity sensor. A capacitive proximity sensor may be combined with a capacitive touch sensor which is configured to detect a change of capacity when the object, for example the user's finger or a stylus guided by the user, approaches or touches the surface of the touch sensor.

According to another embodiment, the touch sensitive surface is activated based on the position information determined by the proximity sensor. For example, if the proximity sensor is camera-based, the touch sensitive surface can be switched off as long as no object is within a certain distance to the touch sensitive surface. If an object approaches the touch sensitive surface, the touch sensitive surface is activated. Thus, energy of the electric device can be saved, as the touch sensitive surface can be deactivated until an object approaches.

According to another aspect of the present invention a user interface for an electronic device is provided. The user interface comprises a touch sensitive surface to be touched by an object, a proximity sensor, and a processing unit. The processing unit is coupled to the proximity sensor. The processing unit is configured to determine a position information of the object approaching the touch sensitive surface without touching the touch sensitive surface using the proximity sensor. In other words, the processing unit is configured to determine the position of the object before the object touches the touch sensitive surface. That means that the processing unit is configured to determine the position of the object within a predetermined environment of the touch sensitive surface by use of the proximity sensor. The processing unit is furthermore configured to estimate a touch position where the object will presumably touch the touch sensitive surface based on the position information. Depending on the estimated touch position the processing unit is configured to control a function of the electronic device.

The user interface may be configured to perform the above-described method and comprises therefore the above-described advantages.

According to another aspect of the present invention, a mobile device comprising the above-described user interface is provided. The mobile device may comprise for example a mobile phone, a personal digital assistant, a mobile music player, a mobile computer, or a mobile navigation system. Due to the above-described user interface, the mobile device may appear more responsive to a user operating the mobile device. Furthermore, energy of a battery of the mobile device may be saved and thus the mobile device may be operated for a longer time before it has to be recharged.

Although specific features described in the above summary and the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows a mobile device according to an embodiment of the present invention.
Fig. 2 shows a mobile device according to an embodiment of the present invention and a finger of a user of the mobile device approaching the mobile device.
Fig. 3 shows method steps of a method according to an embodiment of the present invention.

### DETAILED DESCRIPTION OF PREFERRED EMBODIMENTS

In the following, exemplary embodiments of the invention will be described in more detail. It has to be understood that the following detailed description is given only for the purpose of illustrating the principles of the invention and is not be taken in a limiting sense. Rather, the scope of the invention is defined only by the appended claims and is not intended to be limited by the exemplary embodiments hereinafter.

It is to be understood that the features of the various exemplary embodiments described herein may be combined with each other unless specifically noted otherwise. Same reference signs in the various drawings and the following description refer to similar or identical components.

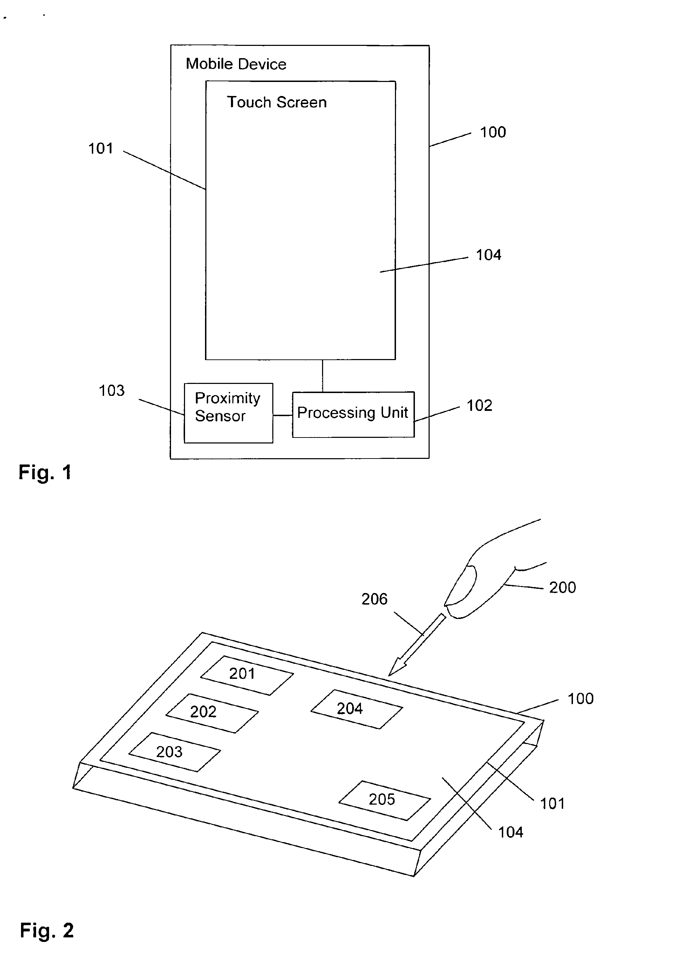

Fig. 1 shows a mobile device 100, for example a mobile telephone, comprising a touch screen 101, a processing unit 102, and a proximity sensor 103. The touch screen 101 comprises for example a display and a touch sensitive sensor or surface 104 arranged on the display. The display may be configured to output graphical and textual information to a user, and the touch sensitive surface may be configured to determine a position where a user of the mobile device 100 touches the surface 104.

The proximity sensor 103 is configured to determine a position of an object in the vicinity of the touch screen 101 already before the object comes into contact with the surface 104. Information of the proximity sensor 103 may furthermore be used for touching virtual objects displayed by a three-dimensional display in front of the touch screen 101. The touch sensitive surface 104 may comprise a capacitive touch sensitive surface which determines a touch position where an object touches the surface 104 by detecting a change of capacity between electrodes of the touch sensitive surface 104 due to the object. The capacitive touch sensitive surface may furthermore be adapted to determine the position of the object before the object contacts the surface 104 by determining a change in capacity. In this case the capacitive touch sensitive surface includes the proximity sensor 103. However, the proximity sensor 103 may comprise a separate unit, for example a separate capacitive sensor, a camera, a stereo camera, an infrared sensor, or a plurality of these sensors adapted to determine a position of an object in an environment of the touch screen 101.

Fig. 2 shows a perspective view of the mobile device 100 and a finger 200 of a user operating the mobile device 100. On the touch screen 101 a plurality of information element fields 201-205 is displayed. The information fields 201-205 displayed on the touch screen 101 may comprise for example icons of applications or virtual operating elements like push buttons, sliders and so on. For example, upon touching one of the information fields 201-205, a corresponding application may be started or an acoustic, optic or haptic response may be output to the user.

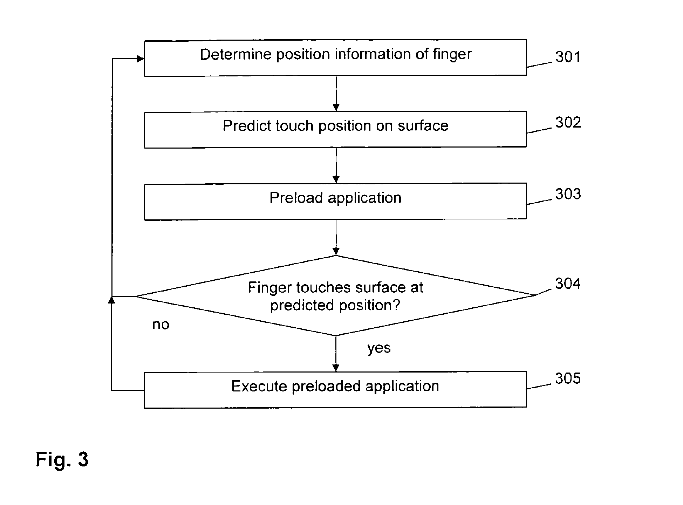

Operation of the mobile device 100 shown in Figs. 1 and 2 will be described in more detail in the following in connection with Fig. 3. In step 301 the processing unit 102 determines a position of the finger 200 by using the proximity sensor 103. The processing unit 102 may track the position or a change of position of the finger 200 to determine a moving direction 206 and a speed of the finger 200. Preferably, based on a sequence of position information determined using the proximity sensor 103, the moving direction 206 of the finger 200 approaching the touch sensitive surface 104 may be determined. Based on the position information, the moving direction 206 and/or the speed of the finger 200, the processing unit 102 predicts in step 302 a touch position on the touch sensitive surface 101 where the finger 200 will presumably contact the touch sensitive surface 101. Furthermore, the processing unit may predict how likely it is that the user will continue the current movement or abort the current movement gesture depending on the speed and distance of the finger with respect to the touch sensitive surface 104. In step 303 the processing unit 102 determines based on the predicted touch position which of the information fields 201-205 will presumably be touched and prepares the action or application which is linked to the corresponding information field 201-205. For example, an application which has to be started upon contacting field 204 may be loaded into a main memory of the processing unit and may be initialized. In another example, a sound signal which has to be output via a loudspeaker of the mobile device 100 upon the finger 200 contacting the information field 202 may be preloaded into the main memory of the processing unit 102 when the processing unit 102 determines that the finger 200 will presumably contact the field 202. In step 304 the processing unit determines if the finger 200 touches the touch sensitive surface 104 at the predicted position. If the finger touches the surface at the predicted position, the processing unit executes in step 305 the preloaded or prepared application. If the finger does not touch the predicted position, the processing unit 102 processes the finger touch without the advantageous usage of the information from the proximity sensor 103. If the finger does not touch the surface 104 the processing unit continues to monitor the position of the finger in step 301.

To sum up, using information from the proximity sensor 103 or from a plurality of proximity sensors the processing unit 102 can make prediction about which user interface element 201-205 will be touched by the user 200 and preload appropriate resources which makes the device 100 seem to be more responsive to a user input.

While exemplary embodiments have been described above, various modifications may be implemented in other embodiments. For example, the touch sensitive surface 104 of the touch screen 101 may be deactivated, and upon detecting the finger 200 approaching the touch screen 101 using the proximity sensor 103, the touch sensitive surface 104 may be activated. Thus, energy for operating the touch sensitive surface 104 may be saved which enables a longer operation of a battery powered mobile device.

Finally, it is to be understood that all the embodiments described above are considered to be comprised by the present invention as it is defined by the appended claims.

## Claims

1. A method for operating an electronic device using a user interface, the user interface comprising a touch-sensitive surface (104) to be touched by an object (200) and a proximity sensor (103), the method comprising:
- determining (301) a position information of the object (200) approaching the touch-sensitive surface (104) without touching the touch-sensitive surface (104) using the proximity sensor (103),
- estimating (302) a touch position where the object (200) will presumably touch the touch-sensitive surface (104) based on the position information, and
- controlling (303) a function of the electronic device (100) depending on the estimated touch position.

2. The method according to claim 1, wherein determining (301) the position information comprises determining a sequence of position information of the object (200) approaching the touch-sensitive surface (104) without touching the touch-sensitive surface (104) using the proximity sensor (103), and
wherein estimating (302) the touch position comprises estimating the touch position where the object (200) will presumably touch the touch-sensitive surface (104) based on the sequence of position information.

3. The method according to claim 2, wherein estimating (302) the touch position comprises:
- determining a moving direction (206) in which the object (200) is moving based on the sequence of position information, and
- estimating the touch position where the object (200) will presumably touch the touch-sensitive surface (104) based on the moving direction (206).

4. The method according to claim 3, wherein estimating (302) the touch position comprises:
- determining a moving speed with which the object (200) is moving based on the sequence of position information, and
- estimating the touch position where the object (200) will presumably touch the touch-sensitive surface (104) based on the moving direction (206) and the moving speed.

5. The method according to any one of the preceding claims, wherein determining (301) the position information comprises
determining the position information of the object (200) approaching the touch-sensitive surface (104) without touching the touch-sensitive surface (104) using the proximity sensor (103) in a vicinity of the touch-sensitive surface (104) within a distance range of 5-100 mm with respect to the touch-sensitive surface (104).

6. The method according to any one of the preceding claims, wherein the user interface comprises furthermore a display for displaying information at the touch-sensitive surface (104), the method comprising:
- displaying a user interface element (201-205) at a user interface element position at the touch-sensitive surface (104), wherein an application related to the user interface element (201-205) is to be started upon the user interface element position being touched, and
- preparing (303) a starting of the application, if the estimated touch position where the object (200) will presumably touch the touch-sensitive surface (104) corresponds to the user interface element position.

7. The method according to claim 6, wherein the touch-sensitive surface (104) is configured to determine a touch position where the object (200) touches the touch-sensitive surface (104), the method further comprising:
- determining (304) the touch position where the object (200) touches the touch-sensitive surface (104), and
- starting (305) the application, if the touch position corresponds to the user interface element position.

8. The method according to claim 6 or 7, wherein preparing (303) the starting of the application comprises at least one of a group consisting of:
- loading a program code of the application into a working memory,
- performing an initialization of the application,
- allocating or loading additional resources required by the application, and
- loading a sound information or a display information which is to be output upon the user interface element position being touched.

9. The method according to any one of the preceding claims, wherein the proximity sensor (103) comprises at least one of a group consisting of a camera, a stereo camera, and a capacitive proximity sensor.

10. The method according to any one of the preceding claims, wherein the object comprises a user's finger (200) or a stylus.

11. The method according to any one of the preceding claims, further comprising:
- activating the touch-sensitive surface (104) based on the position information.

12. A user interface for an electronic device comprising:
- a touch-sensitive surface (104) to be touched by an object (200),
- a proximity sensor (103), and
- a processing unit (102) coupled to the proximity sensor (103), wherein the processing unit (102) is configured to determine a position information of the object (200) approaching the touch-sensitive surface (104) without touching the touch-sensitive surface (104) using the proximity sensor (103), to estimate a touch position where the object (200) will presumably touch the touch-sensitive surface (104) based on the position information, and to control a function of the electronic device (100) depending on the estimated touch position.

13. The user interface according to claim 12, wherein the user interface is configured to perform the method according to any one of claims 1-11.

14. A mobile device, comprising the user interface according to claim 12 or 13.

15. The mobile device according to claim 14, wherein the mobile device (100) comprises at least one mobile device of a group consisting of a mobile phone, a personal digital assistant, a mobile music player, a mobile computer, and a mobile navigation system.
